# EUROPEAN PATENT SPECIFICATION

(11) **EP 0 568 609 B1**
(45) Date of publication and mention of the grant of the patent: **10.04.1996**
(21) Application number: 92904434.5
(22) Date of filing: 02.01.1992
(51) Int. Cl.: F16K 41/02, F16J 15/18

(54) **PERFLUOROELASTOMER VALVE PACKING**
DICHTUNG AUS PERFLUORELASTOMER
GARNITURE D'ETANCHEITE EN PERFLUOROELASTOMERE POUR ROBINET

(30) Priority: 24.01.1991 US 649543
(43) Date of publication of application: 10.11.1993
(73) Proprietor: E.I. DU PONT DE NEMOURS AND COMPANY, Wilmington Delaware 19898 (US)
(72) Inventor: PITTMAN, Gary, Mack, Pearland, TX 77581 (US); STRUNK, John, Neal, Houston, TX 77070 (US); THONDUKOLAM, Krishnan, Ramalingam, Newark, DE 19711 (US)
(74) Representative: Abitz, Walter, Dr.-Ing.
(86) International application number: US9200007
(87) International publication number: WO9213225

(56) References cited:
- EP-A- 0 308 390
- GB-A- 1 001 698
- US-A- 3 467 394
- US-A- 3 472 485
- US-A- 4 364 542

## Description

### Background of the Invention

Valves used in industrial environments often have rigorous performance standards. In the past, packings of polytetrafluoroethylene and other fluoropolymers have been used which were considered to seal valves satisfactorily. For example, US-A-3,467,394 discloses a valve packing having spacer rings formed of material, normally metal, having a higher degree of rigidity than the packing rings.

While packings were previously considered satisfactory with leakages of 10,000 ppm, such levels have now been found to be unacceptable for many applications. Desired emission levels for many industrial applications are below 500 ppm, and levels of less than 10 ppm for particularly toxic and carcinogenic materials would be desirable, particularly for those materials for which emission or handling standards have been established by various governmental agencies.

Current requirements for valve sealing have created a need for packing systems that exceed earlier performance requirements in a cost-effective manner.

### Summary of the Invention

The invention as claimed in claim 1 solves the problem of how to design a valve packing which can reduce valve emissions to levels previously unattainable without precision metal bellows components.

### Brief Description of the Drawings

Figure 1 is a cross-sectional view of a valve packing of the present invention.

Figure 2 is a perspective view of a preferred valve packing of the present invention.

### Detailed Description of the Invention

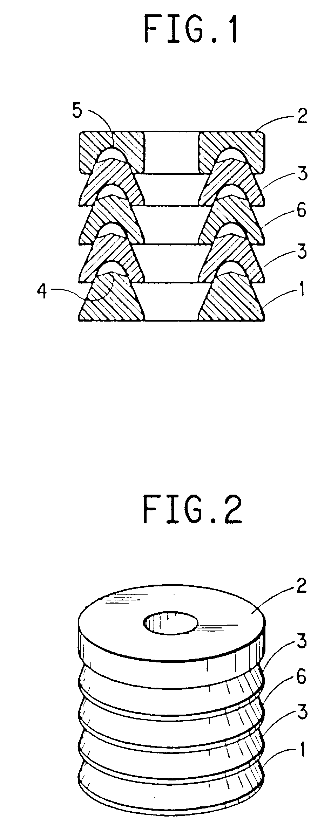

The valve packings of the present invention are composed of a plurality of individual rings, as can be seen in cross-sectional illustration in Figures 1 and 2. There, male adapter 1 is at the upstream end of the packing, and female adapter 2 is at the atmospheric, or downstream end of the packing. Perfluoroelastomeric seal rings 3 are in a chevron or "V" configuration, fitting with ridge 4 of the male adapter and groove 5 of the female adapter.

When two or more seal rings are used in the packings of the present invention, the seal rings are separated by spacer rings 6. These spacer or backup rings can be prepared from the same or different materials as the male and female adapters. The particular material should be adapted to the conditions of use that the packing will experience. High temperature polymeric resins, that is, those stable at temperatures of at least about 260°C (500°F), are preferred, such as non-elastomeric fluoropolymers or polyetheretherketones.

Fluoropolymers which can be used for this component include polytetrafluoroethylenes, such as those commercially available from the Du Pont Company as Teflon®\ PTFE fluoropolymer resins; melt-processable copolymers of tetrafluoroethylene and hexafluoropropylene such as those commercially available from the Du Pont Company as Teflon®, FEP fluoropolymer; and clear, thermoplastic fluoropolymers such as those tetrafluoroethylene/fluorovinylether copolymers commercially available from the Du Pont Company as Teflon®\ PFA. Still other fluoropolymers which can be used effectively in the present invention are those modified copolymers of ethylene and tetrafluoroethylene commercially available from the Du Pont Company as Tefzel®\ fluoropolymers. Polyetheretherketones which can be used include those commercially available from ICI as PEEK.

Perfluoroelastomers which can be used in the preparation of the seal rings of the present invention include, for example, those perfluoroelastomers described in US-A-4,281,092. Perfluoroelastomers of tetrafluoroethylene and perfluoro (methyl vinyl ether) are commercially available from the Du Pont Company as Kalrez®\ perfluoroelastomers. These perfluoroelastomers generally have a termonomer to facilitate curing, such as CF₂=CF-O-CF₂-CF(CF₃)-O-C₆F₅, CH₂=CH-CF₂-CF₂Br, CF₂=CF-O-CF₂CF(CF₃)OCF₂CF₂CN, and CF₂=CH₂.

Other perfluoroelastomers which can be used are those copolymers of tetrafluoroethylene and a mixture of perfluoromethylvinyl ether and higher molecular vinyl ether, and having a cure site monomer derived from perfluoro alkyl diiodide. Those copolymers are commercially available from Daikin Kogyo Co., Ltd. as Perfluor\ perfluoroelastomer, and marketed by Green, Tweed as Chemraz®\ perfluoroelastomer. Still another perfluoroelastomer which can be used in the present invention is that commercially available from NOK-Freudenberg as Simraz®\ perfluoroelastomer.

For those applications in which temperatures greater than about 204°C (400°F) will be encountered, Kalrez®\ perfluoroelastomers exhibit exceptional stability, and better long term performance than other commercial perfluoroelastomers. These materials are accordingly preferred.

The configuration of the present packings will, of course, vary with the particular stem which is to be sealed and the associated cavity. Typically, the valve stems to be sealed have an outer diameter of 0.635 to 3.81 cm (1/4 to 1 1/2 inch), which corresponds to the inner diameter of the packing. The diameter of the cavity in which the stem is located, corresponding to the outer diameter of the packing, is generally about from 1 1/2 to 2 times the diameter of the stem.

The packings of the present invention provide a marked improvement in sealing performance over standard fluoropolymer or flexible graphite packings that have heretofore been used. This is particularly advantageous in industrial chemical equipment, where the emissions of toxic or corrosive fluids such as benzene, butadiene and other carcinogenic or toxic substances can be reduced to less than 500 ppm. In many cases, emissions can be reduced to less than 10 ppm or substantially eliminated.

The present invention is further illustrated by the following specific examples, in which parts and percentages are by weight unless otherwise indicated.

### Examples 1-3

In Examples 1-3, valve packings were assembled substantially as illustrated in Figure 1, to fit valves having a 0.95 cm (3/8-inch) stem. In each packing, the male and female adapters, as well as the spacer, were prepared from Teflon®\ PTFE fluoroelastomer, and the two chevron seal rings were prepared from Kalrez®\ 3018 perfluoroelastomer compound. The outer diameter of the packing components was 2.22 cm (0.873 inch). The spacer and the perfluoroelastomer seals were each 0.696 cm (0.274 inch) thick, the male adapter was 0.467 cm (0.184 inch) thick, and the female adapter was 0.615 cm (0.242 inch) thick.

The packings were assembled in valves controlling benzene, butadiene, and butadiene, in Examples 1-3, respectively. The pressure of the systems was maintained at less than about 1.37 MPa (200 psi) in these Examples. The temperatures were less than 177°C (350°F). Emission levels were checked for 9 separate readings over an 8 week period, and found to average the following readings:
Example 1 - Benzene - 5 parts per million
Example 2 - Butadiene - 7 parts per million
Example 3 - Butadiene - 19 parts per million

## Claims

1. A valve packing comprising at least three rings, including
(a) a male adapter (1),
(b) a female adapter (2), and
(c) at least one chevron seal ring (3) positioned between the male adapter (1) and the female adapter (2), characterized in that the at least one seal ring (3) is composed of perfluoroelastomer.

2. A valve packing of Claim 1 comprising at least two perfluoroelastomer chevron seal rings (3), and at least one spacer ring (6) positioned between each pair of the perfluoroelastomer chevron seal rings (3).

3. A valve packing of Claim 2 wherein each spacer ring (6) is formed from a non-elastomeric high temperature polymer.

4. A valve packing of Claim 3 wherein the male and female adapters (1, 2) are formed from a non-elastomeric high temperature polymer.

5. A valve packing of Claim 4 wherein the high temperature polymer consists essentially of fluoropolymer.

6. A valve packing of Claim 4 wherein the high temperature polymer consists essentially of polyetheretherketone.

## Patentansprüche

1. Ventildichtung, enthaltend wenigstens drei Ringe einschließlich
(a) eines eindringenden Paßstücks (1)
(b) eines aufnehmenden Paßstücks (2) und
(c) wenigstens einer Nutringmaschette (3) zwischen dem eindringenden Paßstück (1) und dem aufnehmenden Paßstück (2),
dadurch **gekennzeichnet**,
daß die wenigstens eine Notringmanschette (3) aus Perfluorelastomer besteht.

2. Ventildichtung nach Anspruch 1, enthaltend wenigstens zwei Nutringmanschetten (3) aus Perfluorelastomer und wenigstens einen Abstandsring (1) zwischen jedem Paar der Nutringmanschetten (3) aus Perfluorelastomer.

3. Ventildichtung nach Anspruch 2, wobei jeder Abstandsring (6) aus einem nichtelastomeren Hochtemperaturpolymer gebildet ist.

4. Ventildichtung nach Anspruch 3, wobei die eindringenden und die aufnehmenden Paßstücke (1, 2) aus einem nichtelastomeren Hochtemperaturpolymer gebildet sind.

5. Ventildichtung nach Anspruch 4, wobei das Hochtemperaturpolymer im wesentlichen aus Fluorpolymer besteht.

6. Ventildichtung nach Anspruch 4, wobei das Hochtemperaturpolymer im wesentlichen aus Polyetheretherketon besteht.

## Revendications

1. Joint de vanne, comprenant au moins trois anneaux, incluant
(a) un adaptateur mâle (1),
(b) un adaptateur femelle (2), et
(c) au moins un anneau d'étanchéité en chevron (3) positionné entre l'adaptateur mâle (1) et l'adaptateur femelle (2), caractérisé en ce que ledit anneau d'étanchéité (3) est composé de perfluoroélastomère.

2. Joint de vanne selon la revendication 1, comprenant au moins deux anneaux en chevron en perfluoroélastomère (3), et au moins un anneau espaceur (6) positionné entre chaque paire d'anneaux d'étanchéité en perfluoroélastomère (3) .

3. Joint de vanne selon la revendication 2, dans lequel chaque anneau espaceur (6) est formé d'un polymère non élastomère pour haute température.

4. Joint de vanne selon la revendication 3, dans lequel les adaptateurs mâle et femelle (1, 2) sont formés d'un polymère non élastomère pour haute température.

5. Joint de vanne selon la revendication 4, dans lequel le polymère pour haute température est essentiellement constitué de fluoropolymère.

6. Joint de vanne selon la revendication 4, dans lequel le polymère pour haute température est essentiellement constitué de polyétheréthercétone.
